# EUROPEAN PATENT APPLICATION

(11) **EP 3 312 421 A1**
(43) Date of publication of application: **25.04.2018**
(21) Application number: 16813458.3
(22) Date of filing: 22.06.2016
(51) Int. Cl.: F04B 3/00, F04B 9/00, F04B 9/10, F04B 9/109, F04B 9/111, F04B 9/12, F04B 9/129, F04B 9/131, F04B 25/00, F04B 35/00

(54) **ULTRA-HIGH ISOSTATIC PRESSURE BOOSTER OR INTENSIFIER IN A MULTI-WALL MULTI-CHAMBER**

(30) Priority: 22.06.2015 CL 20151798
(71) Applicant: Mulet Martinez, Mauricio, Vallenar (CL)
(72) Inventor: Mulet Martinez, Mauricio, Vallenar (CL)
(74) Representative: Balder IP Law, S.L.
(86) International application number: PCT/CL2016/000031
(87) International publication number: WO 2016/205966

(57) **Abstract**

The ultra-high pressure booster or intensifier is a device consisting of two cylinders with two pistons, connected such that they operate simultaneously, which can be mounted in a multi-chamber containing simple pressure boosters nested (not mounted in series or in parallel) that can be used to increase the ultra-high pressure depending on the simple boosters being used. According to the invention, a flow of gas or liquid enters at pressure P1 and once filled at pressure P1, the flow enters into a simple pressure booster which is located inside chamber 1 and divides the flow into two parts: one part that is increased to pressure P2 and housed in another chamber 2 located inside chamber 1, using the energy released by the other part which is reduced to pressure P0 and released from the chamber 1. After several displacements when chamber 2 is at pressure P2, another simple pressure booster begins to operate, which is located inside the chamber 2 and divides the flow into a part that is increased to pressure P3 using energy from the other part which is reduced to pressure P1. After several displacements, chamber 3 is at pressure P3 and a new simple pressure booster and another chamber 4 are ready to continue increasing the pressure. In this way, with new boosters an ultra-high pressure Pn, as high as required, can be reached in chamber n. Each chamber can be formed by multiple walls or a series of sub-chambers, allowing greater resistance to be achieved. The invention can be used for ultra-high pressure sintering, preparing sterilized foodstuffs using ultra-high pressure or cutting materials, among others.

## Description

### Invent Field

There is a mechanism denominated pressure booster or intensifier of a gas or liquid that allows dividing a flow at a determined pressure into two flows resulting that one is at greater pressure and the other at a lower pressure. It does not need external energy since the greater energy per flow unit needed by the flow that delivers greater pressure, it is obtained from another flow that delivers at a fewer pressure.

Currently they are used in steam networks in factories that need water steam pressure for different processes generated in a boiler; or air networks that are generated in a plant for different applications in pneumatic tools or processes; or in hydraulic networks that eventually look after an equip that needs greater pressure than what is stored for different equipment.

In some occasions, for a moment at least, there will be an equipment that needs greater pressure than what is stored and in this time, a pressure booster can be used which delivers the fluid at a greater pressure than the generated by the compressor, boiler or pump, it is immediate, no need of changing generation conditions.

However, if we still need a greater pressure that exceeds the use of a pressure booster until now known, we make use of an ultra-high isostatic pressure booster which is a super simple set of pressure boosters, mounted in a multi-chamber at different pressure levels, "nested" in such a way that one has as fluid entry the discharge of the preceding one, in the following more internal chamber, in such manner that can produce a higher pressure than the breakdown voltage of the own material which is built with.

Therefore, the invent field is broaden to devices that need to use more than one mounted "nested" booster, because ultra-high pressure is needed, and there is not a manner of generating it. The flow is not relevant, but the ultra-high pressure, which just some cubic centimeter per second are enough; for example, in ultra-high isostatic pressure sintering.

### Description of the state of the art

In the state of the art it has been invented the pressure booster which is used as a manner of using greater pressure than what we have, in a boiler, compressor or pump that supplies more than one equipment. It generates in a pressure booster such as INPRONE or SMC CORPORATION just for giving some brand names.

The existent boosters operate just in an atmospheric pressure or relatively low environments, isolated from others that may serve as a source or be in series, in such way that it supplies another booster at greater pressure and creates even greater pressure to supply at a higher pressure. But not nested or immersed at greater pressure. It does not need nor use chamber for its functioning.

Pressure boosters has a duct that is divided into two: whereby the fluid enters at an inflow pressure and two discharges, one whereby the fluid goes out at low pressure and the another whereby the fluid goes out at high pressure. The piston-cylinder that decreases pressure from the fluid, operates in the other piston-cylinder that increases its pressure.

Several boosters can be connected "in series", in such manner that the discharge flow at greater pressure from a first booster, is going to make the incoming flow of the second booster, in such way that the discharge from the second booster at a greater pressure delivers even greater pressure.

However, this connection "in series" of the boosters, is due to the pressure that generates not due to discharges at lower pressure. The booster that is at greater supply pressure still is in the same environment of the first booster.

Existing pressure boosters cannot be mounted nested since does not have chambers nor works in alternative states in which enters fluid under pressure in a moment that is not delivering fluid under pressure and when it is delivering it at greater pressure it also delivers it at lower pressure.

In the ultra-high pressure booster, simple boosters are "nested" where one is located inside another or has another's pressure on the outside. The simple booster discharge is the supply from the precedent booster, except if it is the first one.

### Brief description of the invention

The ultra-high pressure booster is a mechanism that uses more than one simple pressure booster, specially mounted in a multi-chamber; in a way that the first booster, located inside a chamber 1, allows to take a gas or liquid at pressure P1 and raise this pressure up at P2 and injects it into chamber 2; then takes a second simple booster and allows to raise pressure up at P3 to a part of the gas or liquid and houses it in chamber 3, which is located inside of chamber 2; and then continue with a new simple booster that raise it up to P4 and houses it in chamber 4 and so on until raising pressure up until Pn.

Each simple booster, let's take an i-that may be 1, 2, 3, n - it is located inside a chamber i, surrounded by chamber 1 until chamber i-1. It fills with the fluid coming from chamber i-1, but at Pi pressure. It deletes at lower pressure Pi-1 to chamber i-1 and injects at Pi+1 to chamber i+1 simultaneously. With the energy released by the part of the flow that is at lower pressure, the energy from the part of the flow that is at greater pressure increases.

With the gas or liquid at Pn, which is obtained inside chamber n, ultra-high isostatic pressure sintering can be done, for which an electrical resistance heater is required. As a HIP (Hot Isostatic Pressure) system but at ultra-high pressure, much higher than pressure achieved in HIP system.

Note that the system does not need more than the external energy from the gas or liquid at pressure P1, to raise the pressure up until Pn. The energy required to raise the pressure up from Pi to Pi+1 it is obtained from the same gas or liquid that is at Pi, when lowering the pressure at Pi-1, such as the existing pressure booster.

Pressure difference in the access to the ultra-high pressure booster P1, which is provided from the outside with pressure P₀ that is returned, is the energy that enters from stage 1 to n.

It is an ultra-high pressure booster that is used in different processes, in which scientists work until now in the ultra-high pressure in Diamond Anvil Cell. With the booster, the achieved ultra-high isostatic pressure is over three times than the achieved by Hot Isostatic Pressure (HIP) or Cold Isostatic Pressure (CIP) methods that is used in the industry.

It is possible to make ultra-high isostatic pressure and through it make tungsten carbide sintered elements, titanium carbide, boron nitride, etc., that it is not possible to make nowadays. Just like ultra-high pressure sintering it is possible to industrialize a lot of the research made in the Diamond Anvil Cell that includes materials science, drugs, geology, biology, etc., and that is made nowadays as a basic research.

The present invention is a groundbreaking innovation since allows making pieces from new materials that could not be done from aerospace industry such as cars and machinery, tools, weapons, etc. To make ultra-high pressure in the use for sterilized foodstuff without resorting to temperature, in the machinery for cutting materials such as steel and a countless of new applications that have been experienced in the diamond anvil cell.

### Brief description of the figures

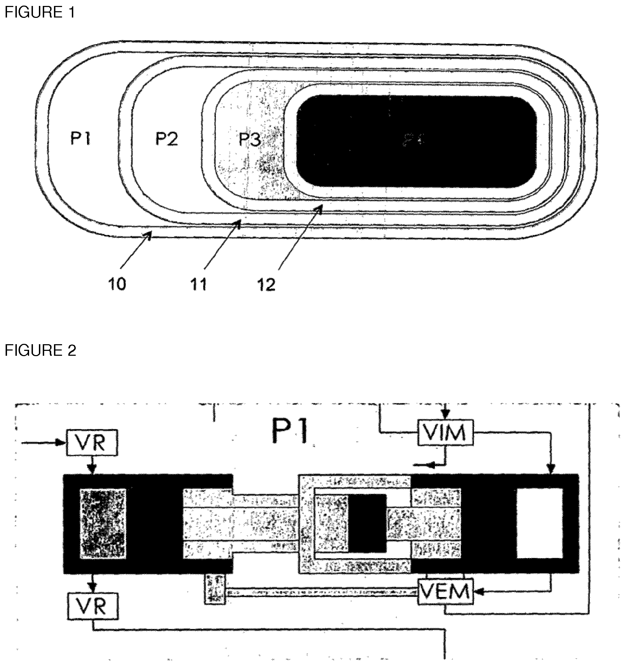

Figure 1: A multi-chamber formed by chambers 10, 11, 12 ... no front and back cover were drawn that facilitates the charge and discharge of the multi-chamber.
Figure 2: A simple pressure booster, but it can work with ultra-high pressure externally. It may be formed by two similar pieces that are two cylinders with two pistons. Or the two cylinders and the two pistons rigidly connected.

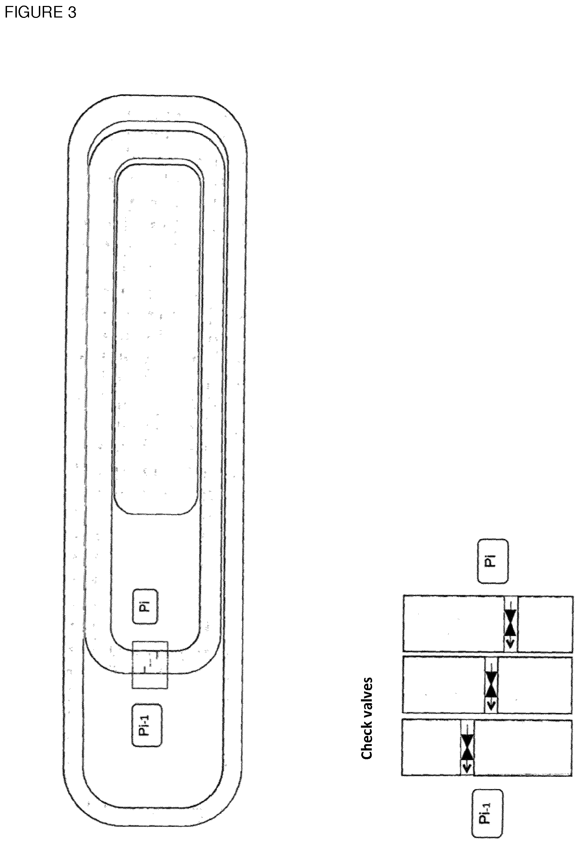

Figure 3: A chamber consisting of sub-chambers that operates as if it were connected by interference. They are not linked, but only with a regulated check valve that allows maintaining a pressure differential in each sub-chamber.
Figure 4: Ultra-high pressure multi-chamber from a gas or liquid.

### Detailed description of the invention

The simple booster consists of two cylinders with their respective pistons, rigidly connected piston with piston and cylinder with cylinder or pistons and cylinders rigidly connected, in a manner that enters fluid at the same pressure into both cylinders as it is shown in figure 200, and a cylinder denominated engine it is released at lower pressure and the other compressor cylinder or pump at greater pressure.

It operates alternatively, when it is entering fluid into the engine cylinder and into the compressor cylinder or pump, they are not delivering, both cylinders are in an expansion race and when they start delivering or emptying, it is not entering.

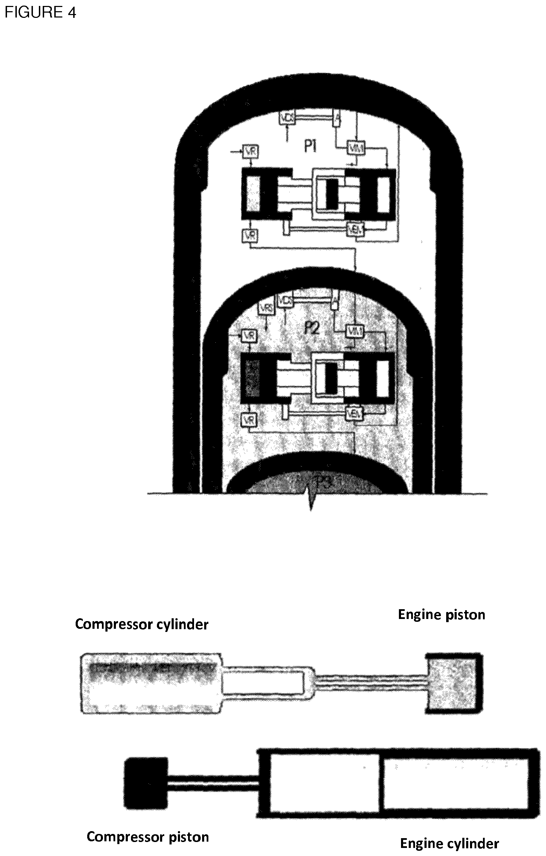

The ultra-high pressure booster, figure 4, is a mechanism that uses more than one simple pressure booster, specially mounted and "nested" in a multi-chamber, in such a way that pressure P1 that supplies the first booster, located inside chamber 1 on the outside or around of the first booster, which at the same time injects part of the fluid at pressure P2 in chamber 2, which is also located inside chamber 1; and lets other part of the fluid at pressure P0, outside chamber 1.

Simple pressure booster 1 operates only when pressure inside of chamber 1 is P1 or greater, other way remains closed and the fluid under pressure which supplies chamber 1, it goes outwards from simple booster 1 increasing pressure until it equals or is greater than P1.

Similarly, simple pressure booster i operates only when pressure inside chamber i is Pi or greater, otherwise remains closed and the fluid under pressure which supplies chamber i goes outward from simple booster i, increasing pressure until it equals or is greater than Pi.

Then, pressure P2 which supplies the second booster locates on the inside of chamber 2, around booster 2 which at the same time injects part of the fluid at pressure P3 in chamber 3 which is inside chamber 2; and lets other part of the fluid at pressure P1 in chamber 1 outside chamber 2.

Pressure P3 which supplies the third booster remains on the inside of chamber 3, around booster 3 which at the same time injects part of the fluid at pressure P4 in chamber 4, which is inside chamber 3; and lets another part of the fluid at pressure P2 in chamber 2, outside chamber 3.

That is how we get to Pn-1, in a way that booster n-1 has around it and inside chamber n-1, a Pn-1 pressure and is in a position of making Pn pressure, which is the target pressure that cannot be achieved in a different way.

A variant of the ultra-high pressure booster is one that may have several sub-chambers forming each chamber, which is achieved with several regulated check valves, at least one in each sub-chamber. This way, it acts as if every sub-chamber were connected by interference.

Simple pressure booster is a mechanism that operates alternately; it does not deliver fluid at a continuous pressure, delivering gas or liquid in a compression race, it delivers fluid at a greater pressure in an internal chamber and simultaneously delivers at lower pressure to a previous chamber or to the outer. After the charge race, it is not delivering fluid but receiving or waiting for the fluid to come under pressure.

The simple pressure booster can operate under pressure or under ultra-high pressure without problem because in the fluid admission race, the fluid is not subject to pressure differences between the fluid the simple booster has around and the one that is on the inside, in a manner that in the charge stage does not experience filtrations. For this reason, it can wait half full for a minute and more.

When it is in the discharge stage it cannot wait half-empty because the fluid inside of the simple booster has pressure differences and therefore, if it tends to stop, there will be filtrations. In the chamber, whichever, is at a determined pressure level; the one that is injecting is at greater pressure and the one that is discharging is at lower level.

The ultra-high pressure booster delivers the fluid to the last internal chamber that may have electrical or laser heater that works on the inside with a noble gas at high temperature. On the inside it may have photographic or television cameras.

The multi-chamber can be so long and thin that we call it multi-pipe and at one end have a special valve that releases the pressure accelerating the fluid to produce cutoff. It is an ultra-high pressure cutter.

To act as a gas cooler at temperatures below 0°C, first by compressing gas it heats almost adiabatically, then the gas on the inside is left cooling until room temperature. Then, part of the gas is taken out in a way that temperature decreases below room temperature.

Each chamber may be constituted by concentric sub-chambers that has not simple booster mechanisms between sub-chambers. In the case of chamber i, pressure increases from sub-chambers that have regulated check valves (VRR, for its acronym in Spanish) that are for inflow and outflow of each sub-chamber, in a manner that each sub-chamber contains fluid at a greater pressure than Pi-1 and lower than Pi, with the exception of being the last one and it is at P1.

To decrease pressure and be able to empty it, a discharge valve is opened with a mechanism that may be automatic.

### Valves and sensors description.-

Inlet valve to engine (VIM, for its acronym in Spanish) has one entering and double exit: It is the valve that is at the entering of the fluid to the chamber where it has an inflow to the simple booster engine. When pressure difference between the fluid that it is entering to chamber i; Pin, and fluid pressure that is in chamber i-1 or in the room if i=1, it is greater or equal than a certain established value of Pi-Pi-1. If it is lower, it does not enter to the engine but on the inside of chamber i, outside the engine.

Pressure difference sensor: It has the function of capturing pressure differences between chamber i and chamber i-1. It communicates with VIM valve in a way that when pressure difference is greater than a pre-established value, VIM valve delivers fluid towards the inside of the engine. If it is lower, the fluid is delivered towards the exterior of the engine.

Outlet valve to the engine, VEM (for its acronym in Spanish): When the engine cylinder is full, the fluid outlet valve of the engine operates towards the precedent chamber at pressure Pi-1. When it is empty the engine closes, again allowing the accumulation of fluid that enters to the engine. It acts with two stoppers; one when it is full and it opens and another when the engine ends closing and the VEM valve closes as well. When each chamber consists of several sub-chambers, the engine outlet valve lets the fluid in the precedent chamber.

VSE: Safety valve operates discharging when there is a fluid excess in chamber i and it is eliminated to chamber i-1. It activates when pressure difference overpasses a greater value than the pre-established pressure difference. It is to ensure that there is not going to be greater pressure despite of the engine displacements.

VR: Check valve both in the access and in the discharge at greater pressure that has the simple booster compressor cylinder or pump. A simple check valve it is connected on the wall of each chamber.

VRR: A regulated check valve is a valve that allows flow passage in one way when it is superior to certain regulated value. It is a check valve that is in each sub-chamber in case there are several sub-chamber by simple booster. Or has each simple booster in case it has cylinders as if they were connected by interference.

### Indicating the manner to carry out the claimed invention

Carrying out the invention is simple. A booster as the claimed one it is built with two cylinders and pistons. Each cylinder and piston is connected with one another and paired with the other cylinder in a manner that both, cylinder and piston function simultaneously.

Cylinders measurement could be as large as 1.0 cubic meter or as small as 1 cubic centimeter.

### How it should be used

A booster should be offered in the market with pressure and flow characteristics that are required. Where is required or who does require a flow booster? The need is frequent in any industry that usually has a caldron to function with different equipment. Think in a prepared food factory or it can be used for producing ultra-high sintered metallic pieces.

## Claims

1. Concentric chambers (10, 11, 12, .. n) listed from the most external (10) to the most internal (n); which are supplied by a gas or liquid under pressure and in the middle of which there are simple pressure boosters. Two cylinders and pistons form each one (21, 22) connected in a manner that both cylinders-pistons simultaneously open and close, so that one operates as pneumatic engine (21) which discharges at low pressure and interconnected to the another that acts as compressor and releases at high pressure. **CHARACTERIZED; by** simple pressure boosters are housed in different concentric chambers and pressure increases until desired level. From outside a gas or liquid is injected at pressure P1 to the chamber 1; when it reaches P1 on the inside of chamber 1, it is taken by the first simple booster and is divided into two flows: one increases its pressure at P2 and houses in chamber 2 with the energy that takes pressure from the other flow that goes outside decreasing pressure at P0. When pressure P2 is reached inside a chamber 2, a second booster takes a part and injects it to chamber 3 until P3, with the energy eliminated by the other part at a lower pressure P1 to chamber i. This is how we get to Pn in chamber n after n-1 boosters, where the fluid can be heated by an electric heater or can be left cooling until room temperature and then decompress it to decrease temperature. Each chamber can be a set of sub-chambers that have no booster amid them and are mounted in order to have a similar effect to effort distribution inside sub-chambers material, banded or connected by interference. Or continuing the fluid running through a multi-tube until runs into with a special valve that accelerates the fluid and decrease pressure constituting itself as, for instance, a fluid jet cutter.

2. Concentric chambers (11, 12, 13, .. n) listed from the most external (10) to the most internal (n) which are supplied by a gas or liquid under pressure. In the middle of them simple pressure boosters are located, where each one is formed by two cylinders and pistons (21, 22) connected such that both cylinders-pistons open or close simultaneously, in a manner that one operates as a pneumatic engine (21) and releases at low pressure; interconnected to the other that acts as compressor (22) and releases at high pressure. **CHARACTERIZED by** starting to charge the fluid that enters to the multi-chamber through VIM 1 valve and check valves that connect the chambers; this fluid passes by all chambers until all the system inside chamber 1 reaches pressure P1 and VIM 1 valve changes its position. This way, the fluid starts entering to the engine cylinder of the first booster and simultaneously starts to enter fluid through a check valve from the first chamber towards the compressor cylinder or pump. When both cylinders are full, the VEM 1 valve from the engine cylinder opens and connects the fluid that was at pressure P1 towards the outside and simultaneously starts operating the compressor cylinder or pump, entering fluid into chamber 2 at greater or equal pressure than P1 through VR valves. Pressure inside chamber 1 decreased because eliminated two displacements at a lower pressure towards the outside and the other towards the inside of chamber 2 such that the VIM 1 valve changes its position and does not allow that next displacement goes to the booster 1 until chamber 1 pressure reaches again at P1. A new displacement is sent from the outside to make pressure reaches P1 and VIM 1 valve is changed allowing that fluid enters booster 1 engine again and simultaneously to the compressor cylinder or pump from the own chamber. When both cylinders are full, a second displacement goes to chamber 2 and another to the outside and VIM 1 valve position changes again and does not allow the access to the engine cylinder until pressure P1 is reached and the third displacement is initiated towards chamber 2. Similarly, more displacements come to chamber 2 until pressure P2 is reached and changes VIM 2 valve position from chamber 2 that opens to let the fluid enter to simple booster 2 and access chamber 3. The engine cylinder releases to chamber 1 and slightly decrease pressure P2 from chamber 2, such that it has to come a second displacement from pressure booster 1 to recover P2, change VIM 2 and start the expansion of simple pressure booster 2 to finally enter the second cylinder into chamber 3. Same way, simple pressure booster i operates only when pressure inside chamber i is Pi or greater. Otherwise, remains closed and the fluid under pressure that supplies chamber i goes outside simple booster i, increasing pressure until it is equal or greater than Pi; and that is how we obtain Pn in chamber n.

3. Concentric chambers (11, 12, 13, .. n) listed from the most external (10) to the most internal (n) that are supplied by a gas or liquid under pressure in the middle of which there are simple pressure boosters, where each one is formed by two cylinders and pistons (21, 22) connected in such manner that both cylinders-pistons open or close simultaneously; so that one operates as a pneumatic engine (21) that releases at low pressure and interconnected to the other that acts as compressor (22) and releases at high pressure. **CHARACTERIZED by** any chamber i, which has a simple booster (31) before chamber i and is supplied by it and then another simple booster (32) inside chamber i, except if it is the last internal chamber connected to a chamber i+1 (33) inside chamber i, which can be a simple chamber or a banded or connected by interference cylinders chamber or being constituted for several sub-chambers (ij, drawing 300) with valves that are able to regulate fluid under pressure between each pair of sub-chambers and act as if it were several sub-chambers connected by interference. All this, because fluid from previous simple booster i-1 or from the outside enters and it starts to increase pressure at higher values than Pi-1 and begin to fill sub-chambers (ij) to Pi1, Pi2, Pik through regulated check valves VRRk until chamber i reaches Pi and starts operating the simple booster i (32) or we are in the last chamber since this may have part of the simple wall, banded or multiple, accepting fluid under pressure with its respective regulated check valves VRR.
